Europäisches Patentamt

European Patent Office

Office européen des brevets

(19)

(11) Numéro de publication : **0 010 482**
**B1**

(12) **FASCICULE DE BREVET EUROPÉEN**

(45) Date de publication du fascicule du brevet :
19.05.82

(21) Numéro de dépôt : 79400716.1

(22) Date de dépôt : 05.10.79

(51) Int. Cl.³ : **B 29 C   6/00**, A 47 C   7/16,
A 47 C  31/02, B 29 C  27/14,
B 29 D  27/00, B 68 G  11/04

(54) Procédé pour fabriquer un corps en matière alvéolaire muni de moyens d'accrochage, barrette fabriquée selon ce procédé et application à la fabrication de sièges.

(30) Priorité : 06.10.78 FR 7828684

(43) Date de publication de la demande :
30.04.80 (Bulletin 80/09)

(45) Mention de la délivrance du brevet :
19.05.82 Bulletin 82/20

(84) Etats contractants désignés :
BE DE GB IT NL

(56) Documents cités :
DE - A - 2 021 224
DE - A - 2 357 491
DE - U - 6 944 602
FR - A - 2 405 123

(73) Titulaire : Etablissements TREVES
109 rue du Faubourg Saint-Honoré
F-75008 Paris (FR)

(72) Inventeur : Fermigier, Claude
5 Rue de l'Université
F-75007 Paris (FR)

(74) Mandataire : Hagel, Francis et al
Cabinet Robert Bloch 39, avenue de Friedland
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

**Procédé pour fabriquer un corps en matière alvéolaire muni de moyens d'accrochage, barrette fabriquée selon ce procédé et application à la fabrication de sièges**

La présente invention concerne un procédé pour fabriquer un corps en matière alvéolaire muni d'éléments d'accrochage, applicable en particulier à la fabrication d'un siège sur lequel on doit poser une housse.

On connaît, pour obtenir un corps en matière alvéolaire muni d'éléments d'accrochage tels que des rubans « auto-agrippants », un procédé dans lequel on introduit une barrette en matière alvéolaire, portant les éléments d'accrochage, dans un élément de moule de même largeur que lesdits éléments, ces derniers venant se placer contre le fond de l'élément de moule, et on réalise un surmoulage pour obtenir un corps en matière alvéolaire incorporant la barrette, de façon que les éléments d'accrochage affleurent à la surface du corps.

Dans ce procédé, les barrettes ont classiquement la même largeur que les éléments d'accrochage et donc que l'élément de moule. De ce fait, le contact entre les flans de la barrette et les parois latérales de l'élément de moule n'est pas très étanche, et la matière alvéolaire en cours d'expansion peut s'infiltrer le long de ces parois et souiller les éléments d'accrochage.

L'invention vise un procédé du type décrit plus haut, dans lequel les éléments d'accrochage ne risquent pas d'être souillés par la matière alvéolaire en cours d'exansion.

A cet effet, selon l'invention, on utilise une barrette en matière alvéolaire plus large que les éléments d'accrochage et comportant une partie débordante de part et d'autre desdits éléments.

L'introduction de la barrette dans l'élément de moule provoque une compression des parties débordantes, ce qui rend beaucoup plus étanche le contact entre la barrette et les parois latérales de l'élément de moule. On supprime ainsi les infiltrations de matière alvéolaire des éléments d'accrochage.

Dans une forme de mise en œuvre particulièrement avantageuse du procédé selon l'invention, pour fabriquer les barrettes, on fixe des bandes d'accrochage sur une plaque de matière alvéolaire et, avant de découper la plaque en barrettes, on détruit, par exemple par chauffage, la matière des bandes d'accrochage suivant les lignes prévues pour la découpe de manière à mettre à nu la matière alvéolaire.

On obtient ainsi, d'une manière particulièrement simple, des barrettes dont la largeur est supérieure à celle des éléments d'accrochage. En outre, ce procédé se prête bien au fonctionnement en continu, car il suffit de synchroniser l'opération de destruction et l'opération de découpe et d'animer la plaque d'un mouvement d'avance approprié.

Ce procédé a également l'avantage, lorsque les éléments d'accrochage sont des rubans textiles, de supprimer l'effilochage que l'on constate dans le procédé classique qui consiste à fixer sur une plaque de matière alvéolaire des bandes d'accrochage et à découper la plaque en lanières transversalement à la direction des bandes. Dans le procédé classique, en effet, la lame de coupe tranche les bandes d'accrochage, ce qui a pour effet un effilochage gênant du bord coupé. Dans l'invention, au contraire, la lame ne rencontre pas les bandes d'accrochage, car celles-ci ont été détruites au préalable, et la lame ne coupe que la matière de la barrette.

L'invention sera bien comprise à la lecture de la description suivante, faite en se référant au dessin annexé, dans lequel :

la figure 1 montre un siège muni de moyens d'accrochage pour la pose d'une housse ;

la figure 2 illustre de façon schématique le procédé de fabrication du siège de la figure 1 ;

la figure 3 montre en perspective une barrette d'accrochage à utiliser selon l'invention dans le procédé illustré à la figure 2, et

les figures 4 et 5 illustrent la fabrication des barrettes d'accrochage selon l'invention telles que représentées à la figure 3.

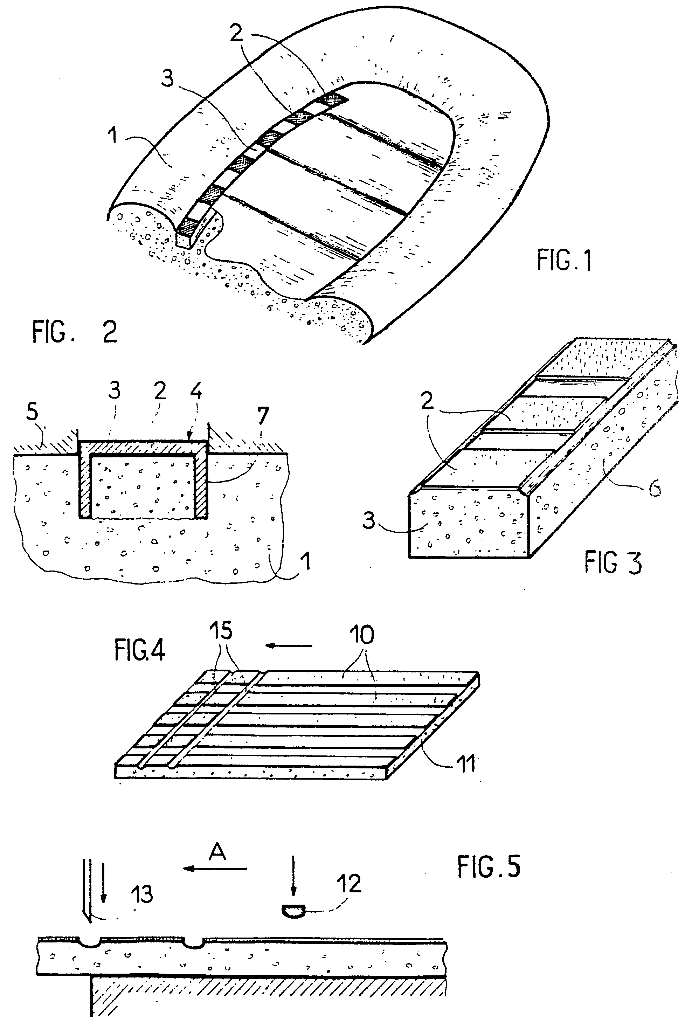

On a représenté à la figure 1 un siège, par exemple un siège d'automobile constitué d'un corps 1 en matières alvéolaire souple, notamment en mousse de polyuréthane. Le siège 1 doit être recouvert d'une housse en tissu, et pour pouvoir fixer facilement la housse sur le siège, celui-ci est muni d'éléments d'accrochage 2 sous forme de rubans auto-agrippants, la face intérieure de la housse devant porter les rubans complémentaires ou être complémentaire par nature. Les rubans 2 sont fixés sur une barrette 3 qui est incorporée dans le siège 1 de façon que les rubans 2 fassent partie en quelque sorte de la surface du siège. La barrette 3 est formée d'une matière alvéolaire, de préférence la même que celle du siège.

La figure 2 illustre schématiquement le procédé de fabrication du corps 1 muni de rubans d'accrochage. On introduit une barrette 3 portant des rubans 2 dans une partie de moule 4 en forme de gouttière, en plaçant les rubans contre le fond de la gouttière, puis on réalise un surmoulage sur la barrette 3 par expansion de la matière du corps 1 dans un moule 5. La partie de moule 4 dans laquelle est logée la barrette 3 est disposée dans un moule 5 de façon que les rubans 2 soient sensiblement alignés sur la surface intérieure des parois du moule 5. On obtient ainsi un corps 1 dans lequel est incorporée la barrette 3 avec les rubans d'accrochage 2 affleurant à la surface du corps. La technique de fabrication des mousses est bien connue et il est inutile de la décrire en détail ici.

Selon l'invention, on utilise dans le procédé illustré à la figure 2 et présentant donc une partie débordante de part et d'autre des rubans, comme représenté à la figure 3. Par ailleurs, la largeur intérieure de la partie de moule 4 est égale à celle des rubans 2, de sorte que l'introduction de la barrette 3 dans la partie de moule 4 provoque une compression des parties débordantes de la barrette, cette compression n'étant possible que grâce à la souplesse de la matière alvéolaire constituant la barrette.

Il en résulte une excellente étanchéité au contact entre les flancs 6 de la barrette et les parois latérales 7 de la partie de moule 4 et, lors du moulage, la matière en cours d'expansion ne peut pas s'infiltrer le long des parois latérales 7, ce qui supprime les risques de souillure des rubans d'accrochage par ladite matière en cours d'expansion.

Les figures 4 et 5 illustrent un mode de fabrication très avantageux de la barrette représentée à la figure 3. De façon classique, pour obtenir une barrette d'accrochage, on fixe des bandes auto-agrippantes 10 sur une plaque 11 de mousse, par exemple de polyuréthane, parallèlement à l'une des dimensions de la plaque 11, par exemple par collage par fusion, puis on découpe à l'aide d'une lame la plaque 11 en barrettes transversalement aux bandes 10. Outre qu'il donne des barrettes de même largeur que les rubans auto-agrippants, avec l'inconvénient susmentionné d'une mauvaise étanchéité lors du surmoulage, ce procédé comporte un découpage des bandes 10 qui provoque un effilochage gênant des bords coupés lorsqu'il s'agit de bandes textiles.

L'invention prévoit d'intercaler entre la fixation des bandes 10 sur la plaque 11 et la découpe en barrettes une opération qui consiste à détruire les bandes auto-agrippantes, par exemple à l'aide d'un élément chauffant 12 dirigé transversalement aux bandes 11, de manière à mettre à nu la matière alvéolaire de la plaque 10 dans des zones 15. Cette opération est réalisée avec le même pas que la découpe qui suit, de sorte que la découpe s'effectue dans une partie où la matière alvéolaire est mise à nu. Ceci est bien visible à la figure 5. On obtient ainsi des barrettes conformes à l'invention, plus larges que les rubans auto-agrippants qu'elles portent. De plus, comme la découpe n'intéresse que les rubans auto-agrippants qui ont été détruits dans les zones 15, il n'existe plus de riques d'effilochage de ces rubans.

L'élément chauffant 12 peut être un fil chaud ou un ruban chauffant de largeur appropriée. De façon avantageuse, il est solidaire de la lame 13 et la plaque 10 est animée d'un mouvement continu suivant la flèche A de la figure 5.

L'invention a été décrite en se référant à l'exemple d'un siège automobile, mais il est clair qu'elle peut s'appliquer pour tous les types de sièges et, de façon plus générale, dans tous les cas où l'on veut obtenir des corps de matière alvéolaire munis d'éléments d'accrochage.

## Revendications

1. Procédé pour obtenir un corps moulé (1) en matière alvéolaire muni d'éléments d'accrochage (2), selon lequel on dispose sur une barrette (3) en matière alvéolaire élastiquement compressible des éléments d'accrochage (2) s'étendant en largeur dans le sens transversal à la barrette et régulièrement espacés le long de ladite barrette, on introduit ladite barrette portant les éléments d'accrochage dans un élément de moule (4) en forme de gouttière, situé à l'intérieur du moule de formage dudit corps et de même largeur que lesdits éléments, ces derniers venant se placer contre le fond de l'élément de moule, et on réalise un surmoulage pour obtenir un corps en matière alvéolaire incorporant la barrette, caractérisé par le fait que l'on utilise une barrette (3) en matière alvéolaire plus large que les éléments d'accrochage (2) et comportant une partie débordant latéralement de part et d'autre desdits éléments.

2. Procédé selon la revendication 1, dans lequel, pour fabriquer les barrettes, on fixe des bandes d'accrochage (10) sur une plaque de matière alvéolaire (11) et, avant de découper la plaquette en barrettes, on détruit la matière des bandes d'accrochage suivant les lignes (15) prévues pour la découpe et qui croisent les bandes d'accrochage de manière à mettre à nu la matière alvéolaire.

3. Procédé selon la revendication 2, dans lequel l'opération de destruction et la découpe sont effectuées en synchronisme et la plaque est animée d'un mouvement d'avance continu.

4. Procédé selon l'une des revendications 2 et 3, dans lequel la destruction de la matière des bandes d'accrochage est réalisée par chauffage.

5. Barrette d'accrochage destinée à être incorporée à un corps en matière alvéolaire obtenu selon le procédé de la revendication 1, comprenant la barrette (3) proprement dite, en matière alvéolaire élastiquement compressible, et des rubans d'accrochage (2) s'étendant en largeur dans le sens transversal à la barrette et régulièrement espacés le long de ladite barrette, caractérisée par le fait que la barrette (3) est plus large que lesdits rubans (2) et comporte une partie débordant latéralement de part et d'autre de ces rubans.

6. Application du procédé selon l'une des revendications 1 à 4 à la fabrication des sièges.

## Claims

1. Process for obtaining a moulded body (1) of cellular material provided with hooking elements (2), according to which there are disposed on a bar (3) of elastically compressible cellular material hooking elements (2) which extend in width transversely with respect to the bar and regularly spaced along said bar, said bar bearing the hooking elements in introduced into a gutter-shaped mould element (4), located inside the mould for shaping said body and of the same width as said elements, the latter being placed against the bottom of the mould element, and a moulding is carried out to obtain a body of cellular material incorporating the bar, characterised in that a bar (3) of cellular material is used, which is wider than the hooking elements (2) and comprising a part laterally projecting on either side of said elements.

2. Process according to Claim 1, in which, to make the bars, hookings strips (10) are fixed on a plate of cellular material (11) and, before cutting the plate into bars, the material of the hooking strips is destroyed along the lines (15) provided for cut-out and which intersect the hooking strips so as to bare the cellular material.

3. Process according to Claim 2, in which the operation of destruction and cut-out are carried out in synchronism and the plate is animated by a continuous advance movement.

4. Process according to one of Claims 2 and 3, in which the destruction of the material of the hooking strips is effected by heating.

5. Hooking bar adapted to be incorporated in a body of cellular material obtained according to the process of Claim 1, comprising the actual bar (3), made of elastically compressible cellular material, and hooking strips (2) extending in with transversely with respect to the bar and regularly spaced along said bar, characterised in that the bar (3) is wider than said strips (2) and comprising a part laterally projecting on either side of these strips.

6. Application of the process according to one of Claims 1 to 4 to the manufacture of seats.

**Ansprüche**

1. Verfahren zur Herstellung eines aus Schaumstoff bestehenden, mit Klammer- bzw. Haftelementen (2) versehenen Formkörpers (1), bei dem man auf einer Leiste (3) aus elastisch zusammendrückbarem Schaumstoff Klamer- bzw. Haftelemente (2) anbringt, die in ihrer Breite in regelmäßigen Abständen über die Länge der Leiste verteilt quer zu derselben verlaufen, indem man die mit den Klammer- bzw. Haftelementen versehene Leiste in eine rinnenförmige Form einlegt, die sich innerhalb des Formwerkzeuges für den Formkörper befindet und deren innere Breite der Breite der Klammer- bzw. Haftelementen entspricht, welche gegen den Boden der rinnenförmigen Form zur Anlage gebracht werden, bevor man einen Ein- bzw. Umschäumungsvorgang durchführt, um den aus Schaumstoff bestehenden Formkörper mit eingeschäumter Leiste zu erhalten, dadurch gekennzeichnet, daß man eine Leiste (3) aus Schaumstoff verwendet, die breiter ist, als es die Klammer- bzw. Haftelemente (2) sind, derart, daß zu beiden Seite der Klammer- bzw. Haftelemente Randstreifen der Leiste überstehen.

2. Verfahren nach Anspruch 1, dadurch gekennzeichnet, daß man zur Fertigung der Leisten Klettenbänder (10) auf einer Schaumstoffplatte (11) befestigt und vor dem Zerschneiden der Schaumstoffplatte in Leisten das Material der Klettenbänder entlang von Linien (15) zerstört, innerhalb welcher die Schnittlinien für das Zerschneiden der Schaumstoffplatte liegen und die die Klettenbänder derart schneiden, daß das Schaumstoffmaterial der Schaumstoffplatte freigelegt wird.

3. Verfahren nach Anspruch 2, dadurch gekennzeichnet, daß man den Arbeitsschritt des teilweisen Zerstörens des Klettenbandmateriales und des Zerschneidens der Schaumstoffplatte synchron durchführt und dabei die Schaumstoffplatte in einer kontinuierlichen Schrittbewegung vorwärtsbewegt.

4. Verfahren nach einem der Ansprüche 2 oder 3, dadurch gekennzeichnet, daß man das Klettenbandmaterial durch Erhitzen teilweise zerstört.

5. Klammer- bzw. Haftleiste zum Einarbeiten in einen nach Anspruch 1 hergestellten, aus Schaumstoff bestehenden Formkörper, wobei diese Klammer- bzw. Haftleiste aus der eigentlichen Leiste aus elastisch zusammendrückbarem Schaumstoff und aus Klettenbändern (2) besteht, die in ihrer Breite in regelmäßigen Abständen über die Länge der Leiste verteilt quer zu derselben verlaufen, dadurch gekennzeichnet, daß die Leiste (3) breiter ist als die Klettenbänder (2) derart, daß zu beiden Seiten der Klettenbänder Randstreifen der Leiste überstehen.

6. Anwendung des Verfahrens nach einem der Ansprüche 1 bis 4 zur Herstellung von Sitzen.

FIG.1

FIG. 2

FIG 3

FIG.4

FIG.5